# EUROPEAN PATENT APPLICATION

(11) **EP 1 905 725 A1**
(43) Date of publication of application: **02.04.2008**
(21) Application number: 06121419.3
(22) Date of filing: 28.09.2006
(51) Int. Cl.: B66F 9/075, B60K 1/04

(54) **Lift truck**

(71) Applicant: BT Industries Aktiebolag, S-59581 Mjölby (SE)
(72) Inventor: Alveteg, Magnus, 590 33 Borensberg (SE); Cardell, Per-Erik, 589 33 Linköping (SE)
(74) Representative: Herbjörnsen, Rut

(57) **Abstract**

The present invention relates to a lift truck comprising a chassis (1) having a battery compartment (2) adapted to accommodate a battery for the operation of the lift truck, wherein the battery compartment (2) extends across the chassis (1) in the lateral direction of the lift truck, between a left and a right longitudinal side of the chassis (1); protective elements (17a-d) mounted to and along the left and right longitudinal sides of the chassis (1) for protecting the battery within the battery compartment (2) from side collisions, wherein the protective elements (17a-d) are mountable on different distances from the chassis (1) so as to widen the chassis, whereby batteries of greater lengths can be accommodated and protected within the battery compartment (2).

## Description

### FIELD OF THE INVENTION

The present invention relates to a lift truck according to the preamble of claim 1.

### BACKGROUND OF THE INVENTION

Battery driven lift trucks, such as narrow aisle trucks need a battery compartment for accommodating the battery. A common solution is to provide a battery compartment which extends across the chassis of the lift truck, between a left and a right longitudinal side of the chassis. However, protective elements are required for protecting the battery within the battery compartment against side collisions.

JP 2001063980 A discloses a lift truck which comprises a battery compartment 24 accommodating batteries 24a for the operation of the lift truck. Protective elements in the form of side panels 29 are provided for protecting the batteries 24a. If more battery capacity is required, an enlargement of the battery compartment is required so that more batteries can be accommodated, However, an enlarged battery compartment will either affect the design of the driving compartment situated above the battery compartment, or require a longer chassis which negatively affects the turning radius of the lift truck.

EP 1 466 860 A2 discloses a lift truck which comprises a battery compartment 1a-c accommodating batteries 2a-c for the operation of the lift truck. Protective elements in the form of bumpers 5a-c are provided at the rear short side of the lift truck for protecting the batteries 2a-c. If more battery capacity is required the whole battery compartment must be replaced by a new battery compartment housing a different battery, However, it is expensive to keep differently sized battery compartments in stock.

### OBJECT OF THE INVENTION

An object to be solved by the present invention is to provide a lift truck which can be reconfigured in an easy an inexpensive manner so as to accommodate batteries of different size.

Yet an object is to provide a lift truck which can be reconfigured so as to accommodate batteries of different size without affecting the turning radius of the lift truck.

### SUMMARY OF THE INVENTION

This object is achieved by means of a lift truck as initially defined and with features according to the characterising portion of claim 1.

According to claim 1 the protective elements are mountable on different distances from the chassis so as to widen the chassis, whereby batteries of greater lengths can be accommodated and protected within the battery compartment. Since the chassis is made wider so as to accommodate larger batteries the same basic chassis body can be employed, and no replacement of the existing battery compartment is required. Furthermore, the chassis width can be determined at a late stage of the lift truck assembly process, which renders flexibility to the process. Moreover, the turning radius of the lift truck is not affected when the chassis is made wider, as is the case in the cited art document due to the elongation of the chassis.

Preferably, the protective elements are mounted to the chassis at a level below the battery compartment. Hereby, loading and unloading of a battery is ensured, while the protection of the battery within the battery compartment is maintained.

Suitably, each protective element comprises a tube element which extends along the longitudinal side of the chassis past the battery compartment. Hereby, a simple way of adapting the shape of the tube element to the contour of the chassis is achieved.

Preferably, the tube element comprises a distance bracket which projects from the tube element a predetermined distance and is attached to the chassis, wherein the predetermined distance is variable. Herby, the tube element can be positioned on different distances from the chassis, whereby a widening of the chassis is possible.

Suitably, the tube element comprises a front and a rear fastener, which are attached to a respective front and rear attachment point of the chassis. Hereby, the tube element can be securely attached to the chassis over its whole length.

Preferably, the rear fastener is a female end portion of the tube element and the rear attachment point comprises a male distance tube, wherein the male distance tube is inserted into the female end portion. Hereby mounting, in the case of a telescopic chassis, is facilitated.

Suitably, the front fastener is attached to a support leg arrangement of the chassis, wherein the support leg arrangement has a variable support leg width. Hereby, the support leg arrangement can be protected against collisions irrespective of its width.

### BRIEF DESCRIPTION OF THE DRAWINGS

The present invention will now be described with reference to accompanying drawings, on which:
Fig. 1 shows a perspective view of a lift truck according to the invention.
Fig. 2 shows an exploded view of the lift truck in fig. 1 being provided with alternative protective elements.

### DETAILED DESCRIPTION OF A PREFERRED EMBODIMENT

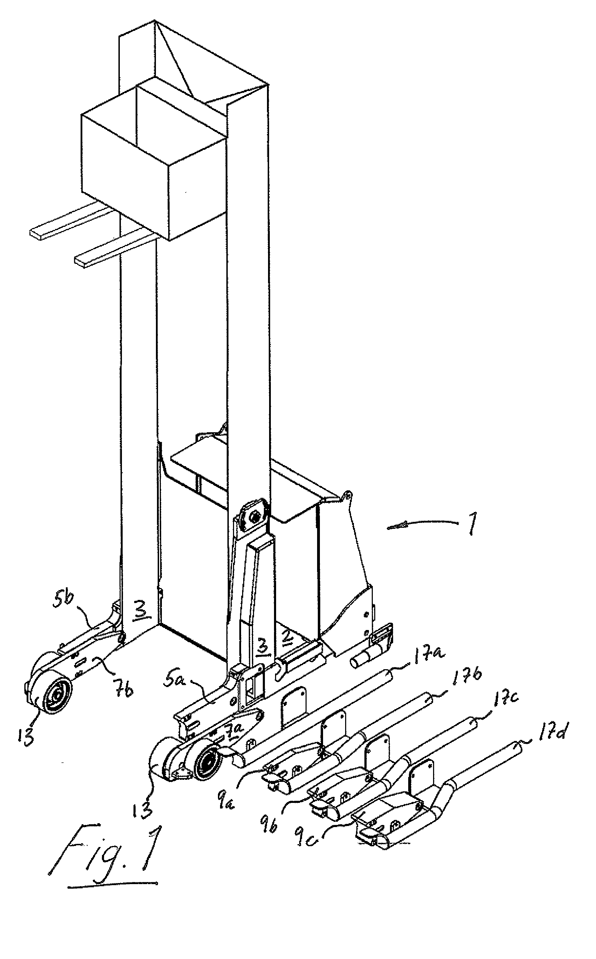

Fig. 1-2 show a lift truck 1 in the form of a narrow aisle truck according to the present invention. A battery compartment 2, adapted to accommodate a battery for the operation of the lift truck, is provided in the chassis 1 of the lift truck. The battery compartment 2 is located behind the mast 4 and extends from a left longitudinal side of the chassis 1 to a right longitudinal side of the chassis, as seen in the forward direction of the lift truck. The battery compartment 2 comprises a not shown delivery table which facilitates replacement of a used battery, i.e. the battery is rolled off and on the delivery table in case of battery replacement.

The chassis 1 comprises a support leg arrangement 3 in the front part of the lift truck, and which is formed as an integral part of the chassis 1. This means that the support leg arrangement 3 is welded, or by any other means permanently fixed, to the chassis body. The support leg arrangement 3 supports and makes the lift truck more stable during lifting operations. The support leg arrangement 3 comprises a left 5a and a right 5b support leg (as seen in the forward direction of the lift truck), which are located in a common horizontal plane, Both support legs 5a, 5b extend forwardly in a longitudinal direction of the lift truck, and are separated from each other in the lateral direction of the lift truck. A left and a right load wheel assembly 7a, 7b are removably mounted, by means of a not shown bolt connection, to the outer or inner longitudinal sides of the left and right support legs 5a, 5b, respectively. Each load wheel assembly 7a, 7b is mounted, with or without a spacer element 9a, 9b, 9c being disposed, between each support leg 5a, 5b and each load wheel assembly 7a, 7b.

Each load wheel assembly 7a, 7b comprises a mounting plate 11 and two load wheels 13. The load wheels 13 are resting on the ground, so that the support leg arrangement 3 and the load wheel assemblies 7a, 7b together support the lift truck.

Hereby, a support leg width is defined as the lateral distance between the load wheel assemblies 7a, 7b. The load wheels 13 are positioned and secured on different sides of the mounting plate 11, but are also somewhat mutually displaced in the longitudinal direction of the lift truck so as to increase the stability of the lift truck.

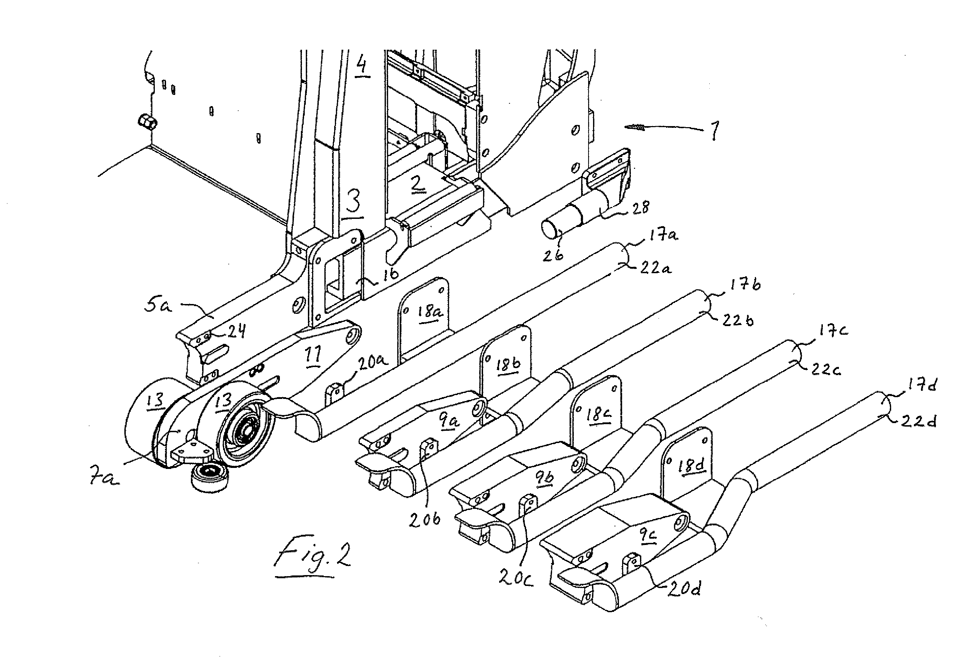

In fig. 2 three spacer elements 9a, 9b, 9c are shown for each load wheel assembly 7a, 7b. They have the same shape and configuration except for the width, which varies for all three spacer elements 9a, 9b, 9c. Since the spacer elements 9a, 9b, 9c are of different width, each spacer element will correspond to different support leg widths. Three different support leg widths can be achieved by means of the three spacer element 9a, 9b, 9c. On the other hand, it is also conceivable to omit the spacer elements 9a, 9b, 9c and mount each load wheel assembly 7a, 7b directly to the outer longitudinal side of the support leg 5a, 5b. Hereby, a more narrow support leg width is achieved compared to the case where a spacer element 9a-c is employed. It is also possible to mount the load wheel assemblies 7a, 7b on the longitudinal inner sides, instead of on the outer sides, of the support legs 5a, 5b. In this case, an even more narrow support leg width will be achieved.

Along the longitudinal outer sides of the chassis, elongated protective elements 17a-d are provided. The protective elements extend rearwardly from each load wheel assembly 7a, 7b and connect to the chassis 1 of the lift truck behind the battery compartment 2. They are mounted at a level below the battery compartment 2, so that battery replacement by means of the delivery table is not obstructed. The protective elements 17a-d serve to protect the load wheel assemblies 7a, 7b from collisions when the lift truck is moving backwards, but also to protect the battery within the battery compartment 2 from side collision, e.g. when the lift truck unintentionally bumps into objects during operation.

Four protective elements 17a-d are shown in fig. 2, where each protective element corresponds to a different chassis width and/or support leg width, since they can be mounted on different distances from the chassis. Each protective element 17a-d comprises a tube element 17a-d which extends along the left and right longitudinal sides of the chassis 1 past the battery compartment 2. The protective elements can be easily formed into desired shapes so that they follow the contour of the chassis 1, e.g. be provided with tube bends, depending on the distance it is positioned relative the chassis 1. To this end, each tube element comprises a distance bracket 18a-d which projects from the tube element 17a-d a predetermined distance and which is mounted to the chassis 1, at an attachment point 16, by means of not shown bolts. The predetermined distance is variable whereby the distance brackets 18a-d will have different lengths. A front 20a-d and a rear 22a-d fastener are provided on each tube element 17a-d and are attached to a respective front 24 and rear attachment point 26 of the chassis 1. The rear fastener 22a-d comprises a female end portion 22a-d of the tube element 17a-d while the rear attachment point 26 comprises a male distance tube 26, which is inserted into the female end portion 22a-d.

The male distance tube 26 is of a predetermined length, so that the same rear attachment point 26 can be used for chassis which are telescopic in the longitudinal direction of the lift truck. In that case, the front attachment point 24 is located on a front half of such chassis, while the rear attachment point 26 is located on a rear half of such chassis. Moreover, the predetermined length of the male distance tube 26 is chosen so that it always can be inserted into the female end portion 22a-d irrespective of the chassis length, i.e. when the chassis is as shortest the majority of the male distance tube 26 is inserted female end portion 22a-d, and when the chassis is as longest only part of the male distance tube 26 is inserted female end portion 22a-d. Furthermore, a bush 28 of different length depending on the length of the chassis can be provided on the male distance tube 26.

Using tube elements 17a-d with distance brackets 18a-d of different lengths the chassis 1 can be made wider. Thus, batteries of greater lengths can be accommodated within the battery compartment 2, and thereby lift trucks with more battery capacity can be provided. Since the chassis 1 and thus the battery compartment 2 is made larger in the lateral direction of the lift truck, the length of the lift truck, and thereby the turning radius of the lift truck is not affected.

## Claims

1. Lift truck comprising:
- a chassis (1) having a battery compartment (2) adapted to accommodate a battery for the operation of the lift truck, wherein the battery compartment (2) extends across the chassis (1) in the lateral direction of the lift truck, between a left and a right longitudinal side of the chassis (1),
- protective elements (17a-d) mounted to and along the left and right longitudinal sides of the chassis (1) for protecting the battery within the battery compartment (2) from side collisions,
**characterised in that** the protective elements (17a-d) are mountable on different distances from the chassis (1) so as to widen the chassis, whereby batteries of greater lengths can be accommodated and protected within the battery compartment (2).

2. Lift truck according to claim 1, wherein the protective elements (17a-d) are mounted to the chassis (1) at a level below the battery compartment (2).

3. Lift truck according to claim 1 or 2, wherein each protective element (17a-d) comprises a tube element (17a-d) which extends along the longitudinal side of the chassis (1) past the battery compartment (2).

4. Lift truck according to claim 3, wherein the tube element (17a-d) comprises a distance bracket (18a-d) which projects from the tube element (17a-d) a predetermined distance and is attached to the chassis (1), wherein the predetermined distance is variable.

5. Lift truck according to claim 3 or 4, wherein the tube element (17a-d) comprises a front (20a-d) and a rear fastener (22a-d), which are attached to a respective front (24) and rear attachment point (26) of the chassis (1).

6. Lift truck according to claim 5, wherein the rear fastener (22a-d) is a female end portion (22a-d) of the tube element (17a-d) and the rear attachment point (26) comprises a male distance tube (26), wherein the male distance tube (26) is inserted into the female end portion (22a-d).

7. Lift truck according to claim 5 or 6, wherein the front fastener (20a-d) is attached to a support leg arrangement (3) of the chassis (1), wherein the support leg arrangement (3) has a variable support leg width.
